# EUROPÄISCHE PATENTANMELDUNG

(11) **EP 4 530 013 A2**
(43) Veröffentlichungstag der Anmeldung: **02.04.2025**
(21) Anmeldenummer: 24202545.0
(22) Anmeldetag: 25.09.2024
(51) Int. Cl.: B23P 19/04, B25B 27/00

(54) **VORRICHTUNG ZUR ZUFÜHRUNG UND ANBRINGUNG EINER GANZ ODER TEILWEISE UMLAUFENDEN DICHTUNG, APPLIKATIONSKOPF UND VERFAHREN**

(30) Priorität: 26.09.2023 DE 102023126143
(71) Anmelder: ATN Hölzel GmbH, 02736 Oppach (DE)
(72) Erfinder: Kißal, Sven, 02736 Oppach (DE); Schäfer, Ralph, 02736 Oppach (DE); Richter, Maik, 02736 Oppach (DE)
(74) Vertreter: Schied, Sebastian

(57) **Zusammenfassung**

Vorrichtung zur Zuführung einer Dichtung (1) an einen Dichtungsapplikationskopf (2) zur Anbringung einer ganz oder teilweise umlaufenden Dichtung (1) an einer Fahrzeugkarosserie, einem Fahrzeugteil oder einer Applikationsplatte zur anschließenden Anbringung an einer Fahrzeugkarosserie oder einem Fahrzeugteil, wobei der Dichtungsapplikationskopf (2) an einem Roboter mit oder über zumindest einem am Roboter angeordneten Armabschnitt (3) oder eine sonstige Handhabungseinrichtung dreh- und/oder schwenkbar festlösbar angeordnet ist und dass an dem Roboter oder einem Robotergelenk an dem zumindest einen Armabschnitt (3) oder der sonstigen Handhabungseinrichtung eine Dichtungszuführungseinheit (4) zum Zuführen der Dichtung (1) vorhanden ist,
**dadurch gekennzeichnet**,
dass zumindest eine Dichtungsführung (5) vorgesehen ist, wobei die zumindest eine Dichtungsführung (5) zumindest einen Dichtungsführungsbereich (6) aufweist, wobei der zumindest eine Dichtungsführungsbereich (6) zur Dichtungszuführeinheit (4) in einer Ebene (7) liegt oder zueinander ausgerichtet ist und die Dichtung (1) von der Dichtungszuführungseinheit (4) um die zumindest eine Dichtungsführung (5) oder entlang oder auf der zumindest einen Dichtungsführung (5) und entlang des zumindest einen Dichtungsführungsbereiches (6) der zumindest einen Dichtungsführung (5) an den Dichtungsapplikationskopf (2) führbar ist.

## Beschreibung

Die Erfindung betrifft eine Vorrichtung zur Zuführung und Anbringung einer ganz oder teilweise umlaufenden Dichtung, einen Applikationskopf und ein Verfahren insbesondere zur automatisierten oder teilautomatisierten Applikation einer Dichtung als Endlosdichtungsgummiprofil oder Dichtungsgummiprofilabschnitt, wobei ein Kreuzen oder Verwickeln oder Verklemmen der Dichtung mit den Achsen des Roboters oder der Handhabungseinrichtung bei der Zuführung der Dichtung verhindert werden soll.

Um ein Kreuzen oder Verwickeln oder Verklemmen der Dichtung zu verhindern sind unterschiedliche Lösungen bekannt.

So ist aus der DE 37 10 726 A1 eine Vorrichtung bekannt, die auf einer Welle, mit der ein Verlegekopf verbunden ist, Umlenk- und Pufferrollen aufweist, über und durch welche gummielastische Schnüre auch bei einer Drehung des Verlegekopfes an den Verlegekopf führbar oder geführt sind.

Weiterhin offenbart die WO 2004/108 459 A1 eine Vorrichtung zur Applikation eines Dichtungsgummis mit einem Applikationskopf, bei welcher eine Pufferrolle vorhanden ist, auf welche Dichtungsgummi aufwickelbar und durch die Pufferrolle auch bei einer Drehung des Applikationskopfes an den Applikationskopf führbar und auf einem Bauteil applizierbar sind.

Bei den genannten Lösungen wird das Kreuzen oder Verwickeln oder Verklemmen der gummielastischen Schnüre oder Dichtung durch die Bildung eines Puffers erreicht.

Aufgabe der Erfindung ist es eine Vorrichtung zur Zuführung und Anbringung einer ganz oder teilweise umlaufenden Dichtung, einen Applikationskopf und ein Verfahren zu schaffen, bei welchen die zu applizierende Dichtung oder der zu applizierende Dichtungsgummi kreuzungsfrei oder verwickelfrei oder verklemmfrei sowie speicherfrei oder pufferfrei geführt und kontinuierlich dem Applikationskopf zuführbar ist.

Mit der Erfindung wird im angegebenen Anwendungsfall als ersten Aspekt der Erfindung erreicht, dass Vorrichtung zur Zuführung und Anbringung einer ganz oder teilweise umlaufenden Dichtung an einer Fahrzeugkarosserie, einem Fahrzeugteil oder einer Applikationsplatte zur anschließenden Anbringung an einer Fahrzeugkarosserie oder einem Fahrzeugteil geschaffen wird, die einen Roboter mit zumindest einem am Roboter angeordneten Armabschnitt oder eine sonstige Handhabungseinrichtung umfasst. An dem zumindest einen Armabschnitt oder an der sonstigen Handhabungseinrichtung ist ein Dichtungsapplikationskopf dreh- und/oder schwenkbar festlösbar angeordnet. Eine entsprechende Drehbewegung und Schwenkbewegung des Dichtungsapplikationskopfes sind unabhängig voneinander oder gemeinsam, also überlagert oder kombiniert möglich und vorgesehen. An dem Roboter oder einem Robotergelenk oder an dem zumindest einen Armabschnitt oder der sonstigen Handhabungseinrichtung ist eine Dichtungszuführungseinheit zum Zuführen der Dichtung vorhanden. Erfindungsgemäß ist zumindest eine Dichtungsführung vorgesehen ist, wobei die zumindest eine Dichtungsführung zumindest einen Dichtungsführungsbereich aufweist. Die zumindest eine Dichtungsführung mit dem zumindest einen Dichtungsführungsbereich ist relativ zum oder in Bezug auf den Dichtungsapplikationskopf ortsfest angeordnet, d.h. sie befindet sich trotz der Bewegung des Roboters, des Armabschnitts oder der Handhabungseinrichtung in einer festen oder gleichbleibenden Position in Bezug auf den Dichtungsapplikationskopf. Dementsprechend werden der Dichtungsapplikationskopf und die zumindest eine Dichtungsführung mit dem zumindest einen Dichtungsführungsbereich gleichermaßen und gemeinsam bewegt ohne die Relativlage zueinander zu verändern. Hierbei liegt der zumindest eine Dichtungsführungsbereich oder die jeweiligen Dichtungsführungsbereich zueinander und zur Dichtungszuführeinheit in einer Ebene oder sind zueinander ausgerichtet, so dass die Dichtung zuverlässig und versatzfrei von der Dichtungszuführungseinheit an die zumindest eine Dichtungsführung sowie insbesondere den jeweiligen zumindest einen Dichtungsführungsbereich an der zumindest einen Dichtungsführung an den Dichtungsapplikationskopf und unabhängig von dessen Lage führbar ist. Der Dichtungsapplikationskopf ist, wie oben beschrieben am Roboter oder am Armabschnitt oder an der Handhabungseinrichtung drehbar oder verdrehbar angeordnet. Der Dichtungsapplikationskopf und die zumindest eine Dichtungsführung mit dem zumindest einen Dichtungsführungsbereich sind in Bezug auf die oder relativ zur Dichtungszuführungseinheit unabhängig verdrehbar am Roboter oder am Armabschnitt oder an der Handhabungseinrichtung angeordnet. Die Dichtungszuführungseinheit verdreht oder dreht sich entsprechend nicht mit dem Dichtungsapplikationskopf mit. In Bezug auf eine Schwenkbewegung des Dichtungsapplikationskopfes, also eine von einer Verdrehbewegung oder Drehbewegung abweichende Verfahrbewegung, ist die Dichtungszuführungseinheit mit dem Dichtungsapplikationskopf gemeinsam schwenkbar oder verfahrbar. Die zumindest eine Dichtungsführung mit dem zumindest einen Dichtungsführungsbereich verfährt oder schwenkt ebenfalls gemeinsam mit dem Dichtungsapplikationskopf und bleibt auch bei der überlagerbaren oder überlagerten Drehbewegung und Schwenkbewegung in einer Ebene zur Dichtungszuführungseinheit.

Erfindungsgemäß ist entsprechend die Dichtung von der Dichtungszuführungseinheit je nach Lage des Dichtungsapplikationskopfes entlang der zumindest einen Dichtungsführung oder zwischen zwei Dichtungsführungen oder zwischen zwei Dichtungsführungen und entlang der Dichtungsführungsbereiche zumindest einer der Dichtungsführungen an den Dichtungsapplikationskopf führbar. Die Dichtung ist somit sowie speicherfrei oder pufferfrei an den Dichtungsapplikationskopf geführt.

Vorteilhaft lassen sich mittels der Vorrichtung zur Zuführung einer Dichtung Drehungen eines Dichtungsapplikationskopf von bis zu 360 Grad realisieren, so dass ein großes Spektrum an Applikationen umsetzbar ist.

Die zumindest eine Dichtungsführung oder die jeweilige Dichtungsführung mit jeweils zumindest einem Dichtungsführungsbereich haben nur eine geringe Bautiefe oder Breite, so dass mit der erfindungsgemäßen Vorrichtung zur Zuführung und Anbringung einer ganz oder teilweise umlaufenden Dichtung eine kompakte Bauweise der Führung der Dichtung an den Dichtungsapplikationskopf und auch eine kompakte Bauweise des Dichtungsapplikationskopfes erreicht wird.

Ein zweiter Aspekt der Erfindung betrifft einen Dichtungsapplikationskopf. Mit dem zweiten Aspekt der Erfindung wird im angegebenen Anwendungsfall erreicht, dass ein Dichtungsapplikationskopf zur Zuführung und Anbringung einer Dichtung an einer Fahrzeugkarosserie, einem Fahrzeugteil oder einer Applikationsplatte durch umlaufende Bewegung entlang einer für die Anbringung der Dichtung vorgesehenen Linie unter Verwendung der Vorrichtung zur Zuführung einer Dichtung an einen Dichtungsapplikationskopf geschaffen wird. Hierbei steht der dreh- und/oder schwenkbare Dichtungsapplikationskopf mit zumindest einer Dichtungsführung in Verbindung. Darunter wird verstanden, dass die zumindest eine Dichtungsführung hierbei am Dichtungsapplikationskopf und/oder an einem Roboter oder Armabschnitt oder an einer Handhabungseinrichtung angeordnet sein kann, welche konstruktionsbedingt beispielsweise über Flansche oder Schnellkupplungen miteinander festlösbar verbunden sind. Erfindungsgemäß weist weiterhin die zumindest eine Dichtungsführung jeweils zumindest einen Dichtungsführungsbereich auf, wobei der zumindest einen Dichtungsführungsbereich oder die jeweiligen Dichtungsführungsbereiche zueinander zu oder mit einer Dichtungszuführeinheit in einer Ebene liegen oder zueinander hinsichtlich einer Führung der Dichtung fluchtend oder in Bezug auf die Längserstreckung der von der Dichtungszuführeinheit zugeführten oder kommenden Dichtung ohne seitlichen Versatz ausgerichtet sind. Die Dichtung ist von der Dichtungszuführungseinheit entlang der zumindest einen Dichtungsführung oder bei zwei Dichtungsführungen zwischen den zwei Dichtungsführungen und je nach Lage insbesondere in Bezug auf eine Drehbewegung des Dichtungsapplikationskopf entlang der jeweiligen Dichtungsführungsbereiche zumindest einer der Dichtungsführungen an den Dichtungsapplikationskopf führbar. Dies schließt ein, dass je nach Lage insbesondere in Bezug auf eine Drehbewegung des Dichtungsapplikationskopf die Dichtung von der Dichtungszuführungseinheit an der zumindest einen Dichtungsführung vorbei direkt an den Dichtungsapplikationskopf führbar ist, ohne Kontakt oder Berührung entlang an dem zumindest einen

Dichtungsführungsbereich geführt zu sein.

Vorteilhaft lässt sich der erfindungsgemäße Dichtungsapplikationskopf um bis zu 360 Grad drehen, so dass ein großes Spektrum an Applikationen umsetzbar ist.

Mit dem dritten Aspekt der Erfindung wird im angegebenen Anwendungsfall erreicht, dass ein Verfahren zum Anbringen einer ganz oder teilweise umlaufenden Dichtung mittels eines Dichtungsapplikationskopfes mit Hilfe eines Roboters oder einer Handhabungsvorrichtung entlang einer für die Anbringung der Dichtung vorgesehenen Linie an einer Fahrzeugkarosserie, einem Fahrzeugteil oder an einer Applikationsplatte zur anschließenden Anbringung vorzugsweise an einer Fahrzeugkarosserie oder einem Fahrzeugteil geschaffen wird. Unter Verwendung der erfindungsgemäßen Vorrichtung zur Zuführung und Anbringung einer ganz oder teilweise umlaufenden Dichtung wird die Dichtung über eine Dichtungszuführungseinheit zugeführt. Die Dichtung wird dem Dichtungsapplikationskopf über Führungen, in Form von beispielsweise Führungsrollen oder Umlenkrollen, und/oder über Zugmittel, in Form von beispielsweise angetriebenen Rollen, Antriebsriemenanordnungen, Zahnriemenanordnungen oder Transportriemenanordnungen, einer Andruckrolle oder einer Andrückvorrichtung zugeführt. Die Dichtung wird auf die vorgesehene Fläche an der Fahrzeugkarosserie oder an dem Fahrzeugteil oder auf Halteleisten an der Applikations- platte aufgerollt bzw. aufgesteckt. Erfindungsgemäß wird die über die Dichtungszuführungseinheit zugeführte Dichtung je nach Lage des um eine Drehachse drehbaren Dichtungsapplikationskopfes entlang zumindest einer Dichtungsführung und entlang zumindest eines Dichtungsführungsbereiches der zumindest einen Dichtungsführung geführt und dem Dichtungsapplikationskopf zugeführt. Hierbei werden die zumindest eine Dichtungsführung und der zumindest eine Dichtungsführungsbereich gemeinsam mit dem Dichtungsapplikationskopf zum Anbringen der Dichtung der Fahrzeugkarosserie, des Fahrzeugteils oder der Applikationsplatte bewegt, da sie in einer relativen Lage zueinander ortsfest sind oder relativ zueinander ihre Lage nicht verändern.

Vom zweiten Aspekt der Erfindung wird ebenfalls mit erfasst, wenn je nach Lage insbesondere in Bezug auf eine Drehbewegung des Dichtungsapplikationskopf die Dichtung von der Dichtungszuführungseinheit an der zumindest einen Dichtungsführung vorbei direkt an den Dichtungsapplikationskopf führbar ist, ohne Kontakt oder Berührung entlang an dem zumindest einen Dichtungsführungsbereich geführt zu sein.

So ist beim erfindungsgemäßen Verfahren oder beim Einsatz der erfindungsgemäßen Vorrichtung oder des erfindungsgemäßen Dichtungsapplikationskopf beim Anbringen der Dichtung entsprechend ein kontinuierliches Zuführen der Dichtung vorgesehen, so dass die Dichtung kontinuierlich durch oder auf oder entlang der Dichtungszuführungseinheit und des jeweiligen Dichtungsführungsbereiches sowie auch der zumindest einen Dichtungsführung geführt wird oder führbar ist.

Vorteilhaft lässt sich die Dichtung lageunabhängig, schnell und kontinuierlich an den Dichtungsapplikationskopf zuführen. Eine aufwändige Pufferung kann vermieden werden. Hierbei lassen sich auch übermäßige Streckungen vermeiden. Zudem wird eine kompakte Bauweise begünstigt.

Vorteilhafte Ausgestaltungen der Erfindung sind in den Unteransprüchen dargestellt.

Vorteilhaft sind zwei Dichtungsführungen vorgesehen, wobei die Dichtungsführungen jeweils den zumindest einen Dichtungsführungsbereich aufweisen. Die zwei Dichtungsführungen mit jeweils dem zumindest einen Dichtungsführungsbereich sind relativ zum oder in Bezug auf den Dichtungsapplikationskopf ortsfest angeordnet, d.h. sie befinden sich trotz der Bewegung des Roboters, des Armabschnitts oder der Handhabungseinrichtung in einer festen oder gleichbleibenden Position in Bezug auf den Dichtungsapplikationskopf. Dementsprechend werden der Dichtungsapplikationskopf und die zwei Dichtungsführungen mit jeweils dem zumindest einen Dichtungsführungsbereich gleichermaßen und gemeinsam bewegt, ohne die Relativlage zueinander zu verändern. Hierbei liegen die Dichtungsführungsbereiche zueinander und zur Dichtungszuführeinheit in einer Ebene oder sind zueinander ausgerichtet, so dass die Dichtung zuverlässig und versatzfrei von der Dichtungszuführungseinheit an die Dichtungsführungen sowie insbesondere den jeweiligen zumindest einen Dichtungsführungsbereich an der jeweiligen Dichtungsführung an den Dichtungsapplikationskopf und unabhängig von dessen Lage führbar ist.

Vorteilhaft lassen sich mittels der Vorrichtung zur Zuführung einer Dichtung Drehungen des Dichtungsapplikationskopf von mehr als 360 Grad realisieren, so dass ein größeres Spektrum an Applikationen und Applikationswegen umsetzbar ist. So lassen sich zudem unmittelbar aufeinanderfolgend wechselseitige Applikationen mit einem umfangreichen Applikationsweg realisieren.

Vorteilhaft ist die zumindest eine Dichtungsführung am Armabschnitt angeordnet oder bei zwei Dichtungsführungen (5) eine erste der zwei Dichtungsführungen am Dichtungsapplikationskopf und eine zweite der zwei Dichtungsführungen am Armabschnitt oder an der sonstigen Handhabungseinrichtung angeordnet, so dass eine kompakte und einfache Konstruktion unter Einsatz des Roboters bzw. dessen Komponenten oder Peripherien und zudem die störungsfreie Führung der Dichtung begünstigt wird.

Indem bei zwei Dichtungsführungen die zwei Dichtungsführungen am Dichtungsapplikationskopf angeordnet sind, lässt sich der Vorrichtungsaufbau weiter vereinfacht und raumreduzierter umsetzen.

Indem die zwei Dichtungsführungen am Armabschnitt oder der sonstigen Handhabungseinrichtung angeordnet sind, lässt sich die Konstruktion für den Dichtungsapplikationskopf einfacher umsetzen und zudem lassen sich Dichtungsführungen unabhängig vom jeweiligen oder benötigten Dichtungsapplikationskopf vorsehen und auslegen.

Indem der Armabschnitt ein Roboterarm ist, wobei die zumindest eine Dichtungsführungen oder bei zwei Dichtungsführungen einer der Dichtungsführungen oder die zwei Dichtungsführungen an dem Zwischenstück oder Verlängerungsstück angeordnet sind, lässt sich die Konstruktion vereinfachen und die Anpassung des Roboters an den jeweiligen Dichtungsapplikationskopf kompakter gestalten.

Indem der Armabschnitt ein einen Roboterarm verlängerndes oder bildendes oder anordbares Zwischenstück oder Verlängerungsstück ist, wobei die zumindest eine Dichtungsführung oder bei zwei Dichtungsführungen eine der Dichtungsführungen oder die zwei Dichtungsführungen an dem Zwischenstück oder Verlängerungsstück angeordnet sind, lässt sich die Konstruktion variabler gestalten und an unterschiedliche Dichtungsapplikationsköpfe anpassen.

Ebenso kann der Armabschnitt ein an den Roboterarm oder ein Robotergelenk anordbares Zwischenstück oder Verlängerungsstück sein. Zudem sind die zumindest eine Dichtungsführung oder bei zwei Dichtungsführungen eine der Dichtungsführungen oder die zwei Dichtungsführungen an dem Zwischenstück oder Verlängerungsstück angeordnet. Das Zwischenstück oder Verlängerungsstück ist damit am Roboter schwenkbar und/oder drehbar, so dass damit die notwendige Lageänderung flexibler ist und zudem die Konstruktion variabler ist.

Indem die Dichtungszuführungseinheit einen Zuführungstrichter aufweist, wird eine zuverlässige und lagegenaue Zuführung der Dichtung an die Dichtungsführungen und den Dichtungsapplikationskopf begünstigt.

Indem bei zwei Dichtungsführungen die zwei Dichtungsführungen zueinander beabstandet angeordnet sind, so dass die Dichtung zwischen den Dichtungsführungen führbar ist, lässt sich der Lagebereich des Dichtungsapplikationskopfes, in welchem die Dichtung entlang der Dichtungsführungsbereiche zumindest einer der Dichtungsführungen an den Dichtungsapplikationskopf führbar ist, begrenzen. Hierdurch lässt sich der mechanische Einfluss auf die Dichtung minimieren.

Vorteilhaft lassen sich zudem eine oder mehr Zuführungsumlenkrollen oder Zuführungsrollen vorsehen, welche je nach entsprechend konkreter Konstruktion und Konfiguration des Dichtungsapplikationskopfes und/oder der Dichtungsführungen und/oder der Dichtungsführungsbereiche vorgesehen sein können oder vorzusehen sind. Diese Zuführungsumlenkrolle oder Zuführungsrolle oder Zuführungsumlenkrollen oder Zuführungsrollen lassen sich am Dichtungsapplikationskopf und/oder im Bereich der oder an der zumindest einen Dichtungsführung oder im Bereich einer der zwei Dichtungsführungen und/oder an einer der zwei Dichtungsführungen und/oder an dem zumindest einen Dichtungsführungsbereich oder an einem der Dichtungsführungsbereiche anordnen oder vorsehen. Vorteilhaft lässt sich Führung der Dichtung unabhängig von einer durch eine Drehbewegung hervorgerufenen geänderten Lage des Dichtungsapplikationskopfes und damit der Lage der Dichtungsführungen und/oder der Dichtungsführungsbereiche von der Dichtungszuführung an den Dichtungsapplikationskopfes und/oder an weitere Umlenkrollen oder weitere Führungsrollen am Dichtungsapplikationskopf begünstigen. Je nach Verlauf der Dichtung oder einem notwendigen oder gegebenen Richtungswechsel zum oder am Dichtungsapplikationskopf können die Zuführungsumlenkrolle oder die Zuführungsrolle oder die Zuführungsumlenkrollen oder die Zuführungsrollen Dichtungsapplikationskopf und/oder an einer der Dichtungsführungen und/oder an einem der Dichtungsführungsbereiche vorgesehen sein. Vorteilhaft wird ein Vereinheitlichen der Führung der Dichtung bei einem nach der Dichtungszuführung, einer der Dichtungsführungen und/oder nach einem der Dichtungsführungsbereiche nachfolgenden Richtungswechsel der Dichtung begünstigt.

Indem jeweiligen Dichtungsführungsbereiche insbesondere an einem Außenumfang bogenförmig oder kreisringförmig oder kreisabschnittförmig sind, wird die Führung und der reibungsarme und/oder spannungsarme Transport der Dichtung auf den jeweiligen Dichtungsführungsbereichen und entlang der jeweiligen Dichtungsführungsbereiche begünstigt.

Indem bei zwei oder mehr der Dichtungsführungsbereiche an der jeweiligen Dichtungsführung die Dichtungsführungsbereiche bogenförmig versetzt oder kreisförmig versetzt oder kreisabschnittförmig versetzt und/oder beabstandet verteilt angeordnet sind, wird die Führung und der reibungsarme und/oder spannungsarme Transport der Dichtung auf den jeweiligen Dichtungsführungsbereichen und entlang der jeweiligen Dichtungsführungsbereiche begünstigt.

Indem die jeweiligen Dichtungsführungsbereiche an der jeweiligen Dichtungsführung kleeblattförmig oder sternförmig versetzt angeordnet sind, wird ebenfalls die Führung und der reibungsarme und/oder spannungsarme Transport der Dichtung auf den jeweiligen Dichtungsführungsbereichen und entlang der jeweiligen Dichtungsführungsbereiche begünstigt.

Indem der jeweilige Dichtungsführungsbereich Führungsbleche aufweist, wobei entlang der Führungsbleche und/oder zwischen zwei parallel beabstandeten Führungsblechen die Dichtung führbar ist, wird die Führung der Dichtung auf den jeweiligen Dichtungsführungsbereichen und entlang der jeweiligen Dichtungsführungsbereiche begünstigt.

Indem der jeweilige Dichtungsführungsbereich zumindest eine Rolle, zumindest ein Band oder eine Gleitfläche aufweist, wird der reibungsarme und/oder spannungsarme Transport der Dichtung auf den jeweiligen Dichtungsführungsbereichen und entlang der jeweiligen Dichtungsführungsbereiche begünstigt.

In einer Weiterbildung des Dichtungsapplikationskopfes steht der dreh- und/oder schwenkbare Dichtungsapplikationskopf mit zwei Dichtungsführungen in Verbindung. Darunter wird verstanden, dass die Dichtungsführungen hierbei am Dichtungsapplikationskopf und/oder an einem Roboter oder am Armabschnitt oder an einer Handhabungseinrichtung angeordnet sein können, welche konstruktionsbedingt beispielsweise über Flansche oder Schnellkupplungen miteinander festlösbar verbunden sind. Erfindungsgemäß weisen die zwei Dichtungsführungen jeweils zumindest einen Dichtungsführungsbereich auf, wobei die Dichtungsführungsbereiche zueinander und zu einer Dichtungszuführeinheit in einer Ebene liegen oder zueinander hinsichtlich einer Führung der Dichtung fluchtend oder in Bezug auf die Längserstreckung der von der Dichtungszuführeinheit zugeführten oder kommenden Dichtung ohne seitlichen Versatz ausgerichtet sind. Die Dichtung ist von der Dichtungszuführungseinheit zwischen den zwei Dichtungsführungen und je nach Lage insbesondere in Bezug auf eine Drehbewegung des Dichtungsapplikationskopf entlang der Dichtungsführungsbereiche zumindest einer der Dichtungsführungen an den Dichtungsapplikationskopf führbar . Dies schließt ein, dass je nach Lage insbesondere in Bezug auf eine Drehbewegung des Dichtungsapplikationskopf die Dichtung von der Dichtungszuführungseinheit zwischen den zwei Dichtungsführungen direkt an den Dichtungsapplikationskopf führbar ist, ohne Kontakt oder Berührung entlang an dem zumindest einen Dichtungsführungsbereich geführt zu sein.

Vorteilhaft werden der Einsatzbereich und der Applikationsbereich des Dichtungsapplikationskopf vergrößert. Entsprechend lassen sich Drehungen des Dichtungsapplikationskopf von mehr als 360 Grad realisieren. Es lassen sich umfangreiche Applikationen und lange Applikationswegen unmittelbar umsetzbar ist. Die schließt unmittelbar aufeinanderfolgend wechselseitige Applikationen mit einem umfangreichen Applikationsweg ebenfalls mit ein.

In einer Weiterbildung des Verfahrens wird die über die Dichtungszuführungseinheit zugeführte Dichtung je nach Lage des um eine Drehachse drehbaren Dichtungsapplikationskopfes zwischen zwei Dichtungsführungen oder zwischen zwei Dichtungsführungen und entlang zumindest eines Dichtungsführungsbereiches zumindest einer der Dichtungsführungen geführt und dem Dichtungsapplikationskopf zugeführt. Hierbei werden die zwei Dichtungsführungen und Dichtungsführungsbereiche gemeinsam mit dem Dichtungsapplikationskopf zum Anbringen der Dichtung der Fahrzeugkarosserie, des Fahrzeugteils oder der Applikationsplatte bewegt, da sie in einer relativen Lage zueinander ortsfest sind oder relativ zueinander ihre Lage nicht verändern.

Indem beim Verfahren je nach Lage des Dichtungsapplikationskopfes die Dichtung an zumindest einem Dichtungsführungsbereich der zumindest einen Dichtungsführung anliegt oder dass je nach Lage des Dichtungsapplikationskopfes bei der Drehung die Dichtung abseits des oder unabhängig von dem zumindest einen Dichtungsführungsbereich der zumindest einen Dichtungsführung dem Dichtungsapplikationskopfes zugeführt wird, lässt sich ein kontinuierlicher Transport und eine spannungsfreie und kreuzungsfreie sowie lagestabile Führung und damit eine zuverlässige Applikation unabhängig von der Lage des oder vom Drehwinkel des Dichtungsapplikationskopfes begünstigen.

Indem beim Verfahren je nach Lage insbesondere in Bezug auf eine Drehbewegung des Dichtungsapplikationskopfes die Dichtung an zumindest einem Dichtungsführungsbereich einer ersten der Dichtungsführungen anliegt und durch eine Drehung des Dichtungsapplikationskopfes um die Drehachse die Dichtung von dem zumindest einen Dichtungsführungsbereich der ersten der Dichtungsführungen abgehoben oder abgewickelt oder abgerollt und an zumindest einem Dichtungsführungsbereich einer zweiten der Dichtungsführungen angelegt oder entlang geführt wird, wird ein kontinuierlicher Transport und eine lagestabile Führung und damit eine zuverlässige Applikation unabhängig von der Lage des oder vom Drehwinkel des Dichtungsapplikationskopfes begünstigt.

So ist beim erfindungsgemäßen Verfahren oder beim Einsatz der erfindungsgemäßen Vorrichtung oder des erfindungsgemäßen Dichtungsapplikationskopf beim Anbringen der Dichtung entsprechend ein kontinuierliches Zuführen der Dichtung vorgesehen, so dass die Dichtung kontinuierlich durch oder auf oder entlang der Dichtungszuführungseinheit und der Dichtungsführungsbereiche sowie auch der Dichtungsführungen geführt wird oder führbar ist.

Indem je nach Lage des Dichtungsapplikationskopfes bei der Drehung die Dichtung beim Übergang zwischen den zwei Dichtungsführungen abseits des oder unabhängig von dem zumindest einen Dichtungsführungsbereiches der Dichtungsführungen oder bei zumindest einer Dichtungsführung abseits des zumindest einen Dichtungsführungsbereiches der zumindest einen Dichtungsführung dem Dichtungsapplikationskopfes zugeführt wird, kann die Zuführung vereinfacht werden und die Anzahl an Umlenkungen vermieden werden, wodurch sich auch Spannungen in der Dichtung minimieren lassen.

Mehrere Ausführungsbeispiele der Erfindung sind in den Zeichnungen dargestellt und werden im Folgenden näher beschrieben. Es zeigen:
Fig. 1 bis Fig. 3 jeweils die Darstellung einer Vorrichtung zur Zuführung einer Dichtung an einen Dichtungsapplikationskopf in unterschiedlichen perspektivischen Ansichten an einem Verlängerungsstück als Armabschnitt,
Fig. 4 und Fig. 5 jeweils eine Vorrichtung zur Zuführung einer Dichtung an einen Dichtungsapplikationskopf in jeweils zueinander gegenüberliegenden Ansichten in der Flucht der Ebene der Dichtungszuführungseinheit und der Dichtungsführungsbereiche,
Fig. 6 eine Schnittdarstellung in der Ebene der Dichtungszuführungseinheit und der Dichtungsführungsbereiche und
Fig. 7 die Darstellung einer Vorrichtung zur Zuführung einer Dichtung an einen Dichtungsapplikationskopf mit einer Dichtungsführung an einem Verlängerungsstück als Armabschnitt.

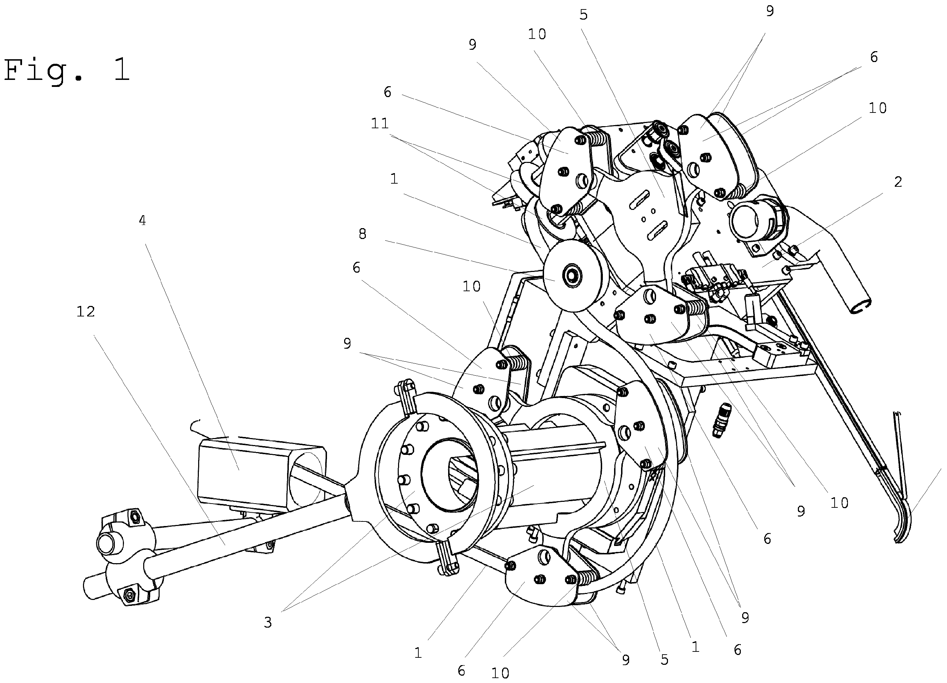

Die Figuren 1 bis 3 zeigen die erfindungsgemäße Vorrichtung zur Zuführung einer Dichtung 1 an einen Dichtungsapplikationskopf 2 zur Anbringung einer ganz oder teilweise umlaufenden Dichtung 1 an einer Fahrzeugkarosserie, einem Fahrzeugteil oder einer Applikationsplatte zur anschließenden Anbringung an einer Fahrzeugkarosserie oder einem Fahrzeugteil. Der Dichtungsapplikationskopf 2 ist in den konkreten Beispielen jeweils an einen Armabschnitt 3 festlösbar angeordnet Der Armabschnitt 3 ist als einen Roboterarm verlängerndes oder bildendes Zwischenstück oder Verlängerungsstück zu verstehen. Der Armabschnitt 3 ist an den Roboterarm oder ein Robotergelenk (nicht dargestellt) anordbar. Entsprechend der gebildeten Achse des Robotergelenkes (nicht dargestellt) am Roboter ist der Armabschnitt 3 und damit der Dichtungsapplikationskopf 2 drehbar und/oder schwenkbar am Roboter angeordnet. Weiterhin ist an dem Roboter am Robotergelenkes (nicht dargestellt) eine Dichtungszuführungseinheit 4 über einen Haltearm 12 angeordnet. Die Dichtungszuführungseinheit 4 weist beispielswiese einen Zuführungstrichter zum Zuführen der Dichtung 1 auf.

Der Armabschnitt 3 und damit der Dichtungsapplikationskopf 2 ist unabhängig von der Dichtungszuführungseinheit 4 drehbar, so dass in Bezug auf eine Drehbewegung des Dichtungsapplikationskopf 2 die Dichtungszuführungseinheit 4 unabhängig ist oder nicht mit verdreht wird. Die Dichtungszuführungseinheit 4 ist ebenso wie auch der Armabschnitt 3 und damit der daran angeordnete Dichtungsapplikationskopf 2 jedoch mit dem Robotergelenk (nicht dargestellt) schwenkbar oder verfahrbar.

Es ist vorgesehen, dass zwei Dichtungsführungen 5 vorhanden sind, wobei die Dichtungsführungen 5 jeweils zumindest einen Dichtungsführungsbereich 6 aufweisen. In den konkreten Ausführungsbeispielen sind jeweils an einer der Dichtungsführungen 5 drei Dichtungsführungsbereiche 6 vorhanden.

In den konkreten Ausführungsbeispielen gemäß der Figuren 1 bis 3 ist eine erste der zwei Dichtungsführungen 5 am Dichtungsapplikationskopf 2 und eine zweite der zwei Dichtungsführungen 5 am Armabschnitt 3 angeordnet.

Ebenso können gemäß einer weiteren nicht gezeigten Ausführung die zwei Dichtungsführungen 5 entweder am Dichtungsapplikationskopf 2 oder am Armabschnitt 3 oder der sonstigen Handhabungseinrichtung angeordnet sein.

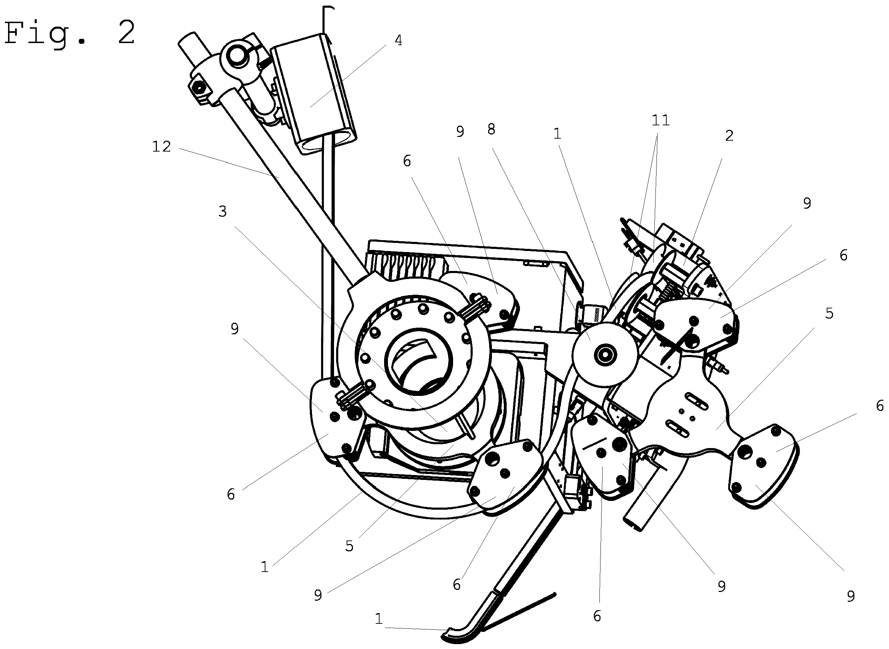

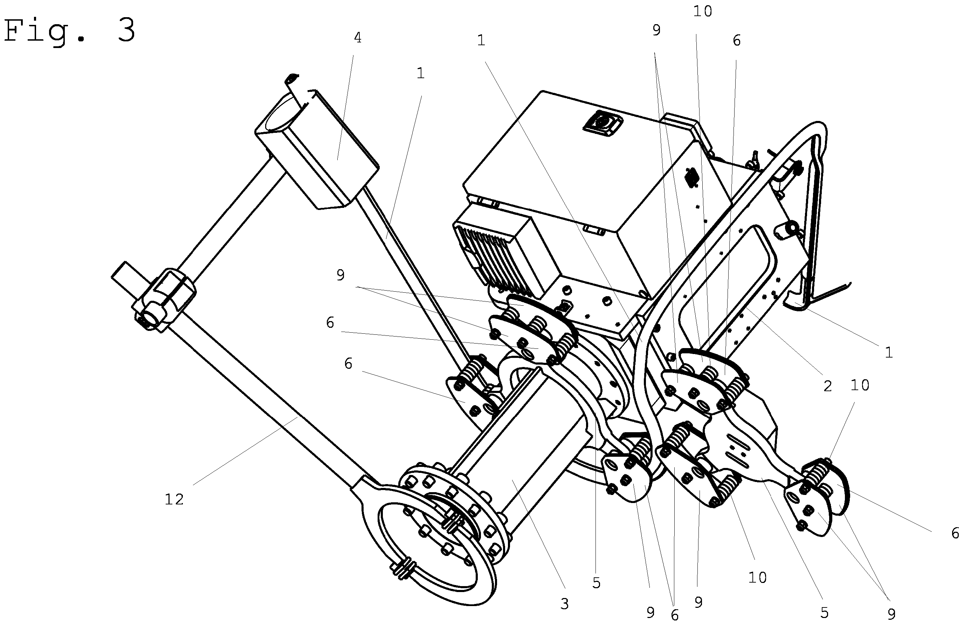

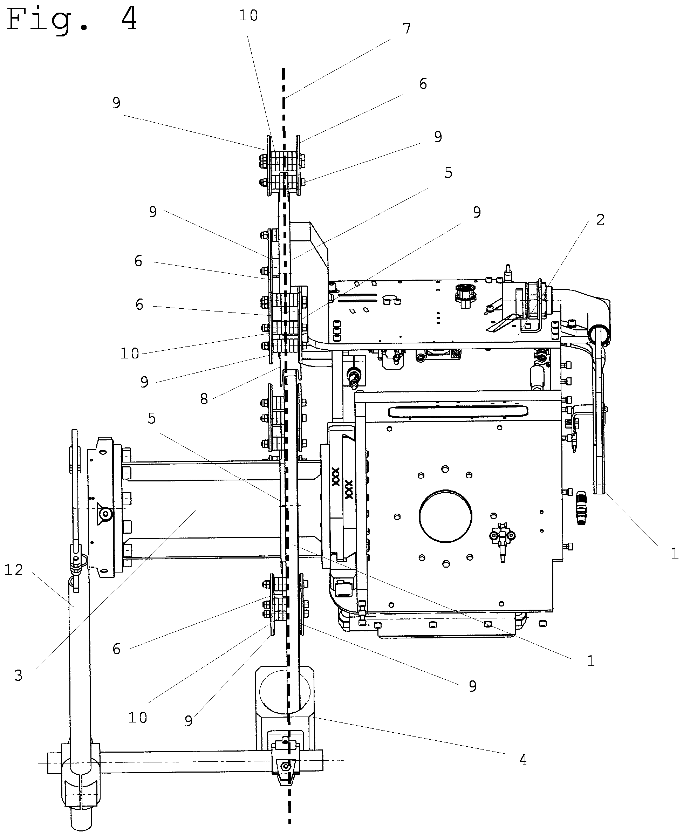

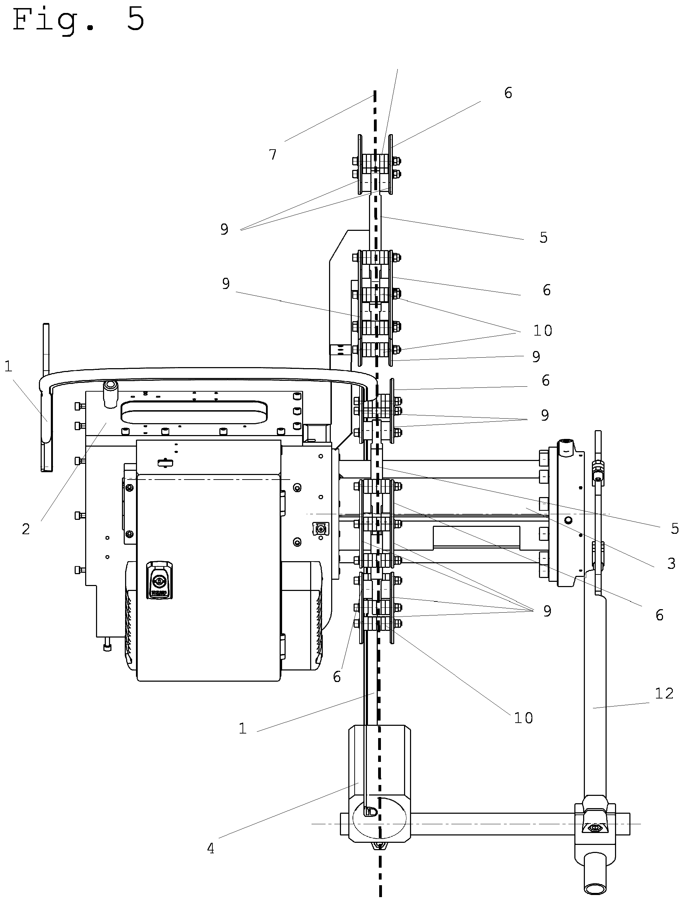

Die Dichtungsführungsbereiche 6 liegen, wie in den Figuren 4 und 5 dargestellt, zueinander und zur Dichtungszuführeinheit 4 einer Ebene 7. Die Dichtungsführungsbereiche 6 und die Dichtungszuführeinheit 4 sind entsprechend zueinander ausgerichtet, dass die Dichtung versatzfrei von der Dichtungszuführungseinheit 4 und entsprechen der Lage des Dichtungsapplikationskopf 2 direkt oder über einen, zwei oder mehr der Dichtungsführungsbereiche 6 an der jeweiligen Dichtungsführung 5 an den Dichtungsapplikationskopf 2 und unabhängig von dessen Lage insbesondere in Bezug auf eine Drehbewegung führbar ist. In den Figuren 1 und 2 ist gezeigt, dass ausgehend von der aktuellen Lage des Dichtungsapplikationskopf 2 die Dichtung 1 von der Dichtungszuführungseinheit 4 an den oder entlang der oder um die Dichtungsführungsbereiche 6 an einer der Dichtungsführungen 5 über eine Zuführungsumlenkrolle 8 an den Dichtungsapplikationskopf 2 geführt ist. In Figur 3 ist zur besseren Übersicht die Zuführungsumlenkrolle 8 nicht dargestellt. Am Dichtungsapplikationskopf 2 sind zudem, wie in Figur 1 und 2 dargestellt, weitere Umlenkrollen 11 oder Führungsrollen 11 vorhanden, um welche oder entlang welcher die Dichtung 1 geführt ist.

Entsprechend ist je nach aktueller Lage in Bezug auf die Drehbewegung des Dichtungsapplikationskopf 2 die Dichtung 1 von der Dichtungszuführungseinheit 4 zwischen den zwei Dichtungsführungen 5 führbar, ohne dass die Dichtung 1 an zumindest einer der Dichtungsführungsbereiche 6 entlang an den Dichtungsapplikationskopf 2 geführt ist. Ebenso kann je nach aktueller Lage des Dichtungsapplikationskopf 2 in Bezug auf dessen Drehbewegung die Dichtung 1 von der Dichtungszuführungseinheit 4 zwischen den zwei Dichtungsführungen 5 und entlang an zumindest einer der Dichtungsführungsbereiche 6 entlang an den Dichtungsapplikationskopf 2 geführt sein.

Die zwei Dichtungsführungen 5 sind zueinander beabstandet angeordnet, so dass je nach aktueller Lage in Bezug auf die Drehbewegung des Dichtungsapplikationskopf 2 in einem bestimmten Bereich auch eine Zuführung an den Dichtungsapplikationskopf 2 zwischen den zwei Dichtungsführungen 5 ohne Kontakt oder Berührung mit den Dichtungsführungsbereichen 6 an den Dichtungsapplikationskopf 2 gegeben ist.

Wie in den Figuren 1 bis 3 dargestellt, sind die Dichtungsführungsbereiche 6 an der jeweiligen Dichtungsführung 5 kleeblattförmig beabstandet verteilt angeordnet. Die jeweiligen Dichtungsführungsbereiche 6 sind am Außenumfang kreisabschnittförmig, wobei der jeweilige Dichtungsführungsbereich 6 Führungsbleche 9 aufweist, wobei zwischen den Führungsblechen 9 Rollen 10 angeordnet sind, durch die eine kreisabschnittförmige Führung oder ein kreisabschnittförmiger Verlauf der Dichtung beschrieben wird oder erfolgt. Zwischen den parallelen Führungsblechen 9 oder entlang der Führungsbleche 9 und auf oder über den Rollen 10 ist je nach aktueller Lage in Bezug auf die Drehbewegung des Dichtungsapplikationskopf 2 die Dichtung 1 geführt oder führbar.

Statt der Rollen 10 kann der jeweilige Dichtungsführungsbereich 6 auch zumindest ein Band oder eine Gleitfläche aufweisen.

In den Figuren 1 bis 3 wurde zur besseren Übersicht auf die Darstellung weiterer Details des Dichtungsapplikationskopfes 2 verzichtet.

Die Figuren 4 und 5 zeigen eine Vorrichtung zur Zuführung einer Dichtung 1 an einen Dichtungsapplikationskopf 2. Der Dichtungsapplikationskopf 2 ist in den Figuren 4 und 5 in jeweils zueinander gegenüberliegenden Ansichten in der Flucht der Ebene der Dichtungszuführungseinheit und der Dichtungsführungsbereiche dargestellt.

Ergänzend zu der Beschreibung zu den Figuren 1 bis 3, die entsprechend auf die Figuren 4 und 5 zu trifft, ist in den Figuren 4 und 5 dargestellt, dass die an einem Robotergelenk (nicht dargestellt) über einen Haltearm 12 angebrachte Dichtungszuführungseinheit 4 zum Zuführen der Dichtung 1 sowie die Dichtungsführungsbereiche 6 an den beiden Dichtungsführungen 5 sind zueinander ausgerichtet und jeweils in einer Ebene 7 liegen.

Die Dichtung 1 ist von der Dichtungszuführungseinheit 4 zwischen den zwei Dichtungsführungen 5 oder zwischen den zwei Dichtungsführungen 5 und entlang des zumindest einen Dichtungsführungsbereiches 6 zumindest einer der Dichtungsführungen 5 an den Dichtungsapplikationskopf 2 führbar oder geführt.

Die Dichtungsführungsbereichen 6 weisen jeweils zwei parallel beabstandete Führungsbleche 9 auf, zwischen denen die Dichtung 1 geführt. Weiterhin sich an den Dichtungsführungsbereichen 6 Rollen 10 vorhanden, die zwischen den Führungsbleche 9 angeordnet sind.

Die erste der zwei Dichtungsführungen 5 ist am Dichtungsapplikationskopf 2 und die zweite der zwei Dichtungsführungen 5 am Armabschnitt 3 angeordnet. Der Armabschnitt 3 ist am nicht dargestellten Robotergelenk als durch das Robotergelenk drehbares Zwischenstück oder Verlängerungsstück angeordnet, während der Haltearm 12 an dem nicht dargestellten Robotergelenk in dem Bereich angeordnet ist, welcher schwenkbar ist, jedoch die Drehbewegung am Robotergelenk oder des Robotergelenks davon unabhängig ist und auf den Haltearm 12 und damit die Dichtungszuführungseinheit 4 keinen Einfluss hat.

Der Dichtungsapplikationskopf 2 ist am Armabschnitt 3 festlösbar angeordnet.

Sofern in einem nicht dargestellten Ausführungsbeispiel zwei Dichtungsführungen 5 mit den Dichtungsführungsbereichen 6 am Dichtungsapplikationskopf 2 angeordnet sind, wären diese ebenfalls im Bereich neben dem Applikationskopf in Richtung des Roboters in einer Ebene 7 zur Dichtungszuführungseinheit 4 beabstandet auszurichten. Vorteilhaft ist hierbei der Dichtungsapplikationskopf 2 ebenfalls über einen Armabschnitt 3 am Roboter angeordnet, wobei der Dichtungsapplikationskopf 2 am Armabschnitt 3 ebenfalls festlösbar angeordnet ist.

Sind in einem weiteren nicht dargestellten Ausführungsbeispiel die zwei Dichtungsführungen 5 am Armabschnitt 3 oder der sonstigen Handhabungseinrichtung angeordnet, wäre eine der Dichtungsführungen 5 um den Armabschnitt 3 und die weitere der Dichtungsführungen 5 am Armabschnitt 3 beabstandet angeordnet und in einer Ebene 7 zur Dichtungszuführungseinheit 4 ausgerichtet.

Entsprechend ist jeweils die Dichtung 1 von der Dichtungszuführungseinheit 4 zwischen den zwei Dichtungsführungen 5 oder zwischen den zwei Dichtungsführungen 5 und entlang des zumindest einen Dichtungsführungsbereiches 6 zumindest einer der Dichtungsführungen 5 an den Dichtungsapplikationskopf 2 führbar.

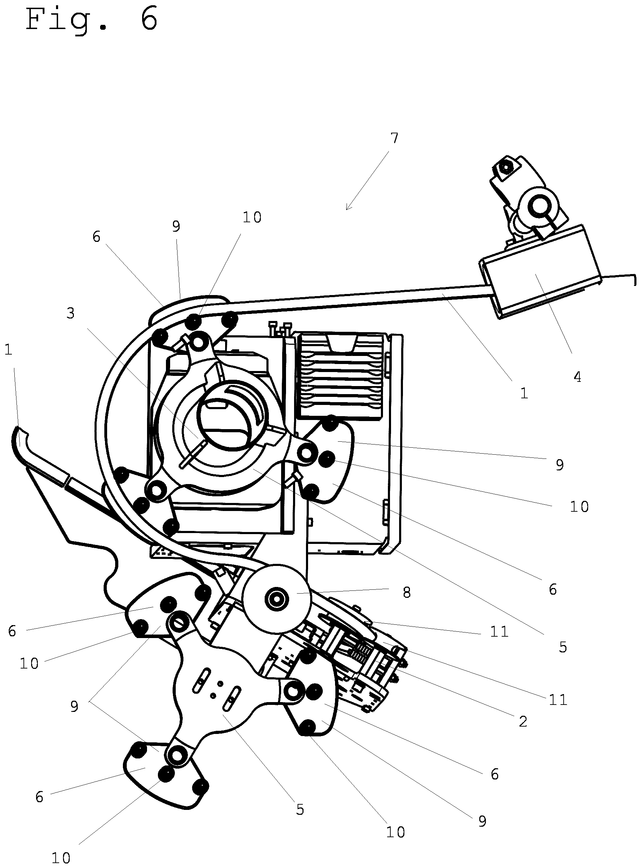

Die Darstellung in Figur 6 zeigt ein Ausführungsbeispiel als Schnittdarstellung in der Ebene 7 der Dichtungszuführungseinheit 4 und der Dichtungsführungsbereiche 6 an den Dichtungsführungen 5. In der angegebenen Lage des Dichtungsapplikationskopf 2 ist die Dichtung 1 ist von der Dichtungszuführungseinheit 4 um zwei Dichtungsführungsbereiche 6 der Dichtungsführung 5 am Armbereich 3 über eine Zuführungsumlenkrolle 8 an den Dichtungsapplikationskopf 2 geführt. Hierbei ist die Dichtung 1 zwischen den zwei Dichtungsführungen 5 an den Dichtungsapplikationskopf 2 geführt. Dreht sich der Dichtungsapplikationskopf 2 in Bezug auf die dargestellte Perspektive im Uhrzeigesinn, wird die Dichtung 1 von den beiden Dichtungsführungsbereichen 6 der der Dichtungsführung 5 am Armbereich 3 nach einander abgewickelt oder abgehoben und schwenkt in einen Bereich zwischen den Dichtungsführungen 5 und bei weiterer Drehung des Dichtungsapplikationskopf 2 an oder um die oder entlang der Dichtungsführungsbereiche 6 der der Dichtungsführung 5 am Dichtungsapplikationskopf 2 geführt zu werden.

Bei einer ausgedehnten Drehung im Uhrzeigesinn oder entgegen des Uhrzeigersinns ist die Führung der Dichtung 1 weiterhin gewährleistet, da auch in diesem Fall jeweils ein Dichtungsführungsbereich 6 zur Führung der Dichtung 1 an den Dichtungsführungen 5 vorhanden ist.

An den Dichtungsführungsbereichen 6 sind jeweils zwei parallel beabstandete Führungsbleche 9 vorhanden, wobei jeweils nur das zum Dichtungsapplikationskopf 2 weisende Führungsblech 9 dargestellt ist. An dem dargestellten Führungsblech 9 sind Rollen 10 dargestellt, wobei die Rollen 10 zwischen den Führungsblechen 9 angeordnet sind.

Im Bereich der am Dichtungsapplikationskopf 2 angordneten, in der Figur 6 unten dargestellten Dichtungsführung 5 ist eine Zuführungsrolle 8 vorgesehen, über welche die Dichtung 1 an Umlenkrollen 11 und Führungsrollen 11 am Dichtungsapplikationskopf 2 und an den Dichtungsapplikationskopf 2 für die zur Anbringung an einer Fahrzeugkarosserie, einem Fahrzeugteil oder einer Applikationsplatte zur anschließenden Anbringung an einer Fahrzeugkarosserie oder einem Fahrzeugteil geführt ist.

Weiterhin wird auf die Beschreibung zu den Figuren 1 bis 5 verwiesen, die entsprechend in Bezug auf die Ausführung gemäß der Figur 6 anwendbar ist.

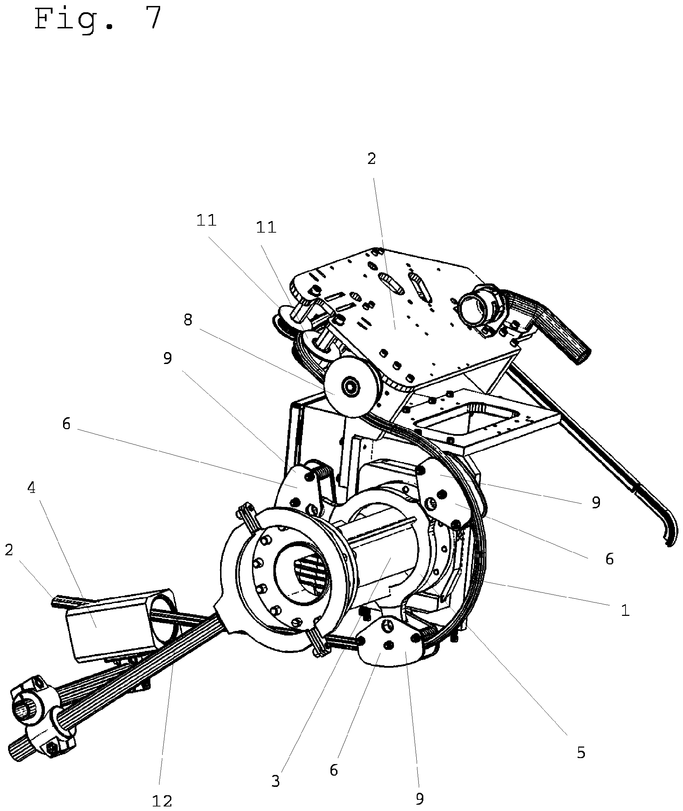

Der wie in den Figuren 1 bis 7 dargestellte erfindungsgemäße dreh- und/oder schwenkbare, vereinfacht dargestellte Dichtungsapplikationskopf 2 zur Zuführung und Anbringung einer Dichtung 1 an einer Fahrzeugkarosserie, einem Fahrzeugteil oder einer Applikationsplatte durch umlaufende Bewegung entlang einer für die Anbringung der Dichtung 1 vorgesehenen Linie, steht mit zwei Dichtungsführungen 5 in Verbindung. An den jeweiligen Dichtungsführungen 5 ist jeweils zumindest ein Dichtungsführungsbereich 6 vorhanden. Die Dichtungsführungsbereiche 6 liegen zueinander und zu einer Dichtungszuführeinheit 4 in einer Ebene 7 oder sind zueinander in einer Ebene 7 liegend ausgerichtet. Die Dichtungszuführeinheit 4 und die Dichtungsführungsbereiche 6 sind zueinander in einer Flucht ausgerichtet angeordnet. Die Dichtung 1 ist hierbei von der Dichtungszuführungseinheit 4 zwischen den zwei Dichtungsführungen 5 an den Dichtungsapplikationskopf 2 geführt. Je nach Lage in Bezug auf eine Drehbewegung des Dichtungsapplikationskopfes 1 ist die Dichtung 1 entlang der Dichtungsführungsbereiche 6 zumindest einer der Dichtungsführungen 5 an den Dichtungsapplikationskopf 2 geführt oder führbar. Abweichend davon ist in Figur 7 die Dichtung 1 von der Dichtungszuführungseinheit 4 entlang der Dichtungsführung 5 an den Dichtungsapplikationskopf 2 geführt. Je nach Lage in Bezug auf eine Drehbewegung des Dichtungsapplikationskopfes 1 ist die Dichtung 1 entlang der Dichtungsführungsbereiche 6 der Dichtungsführungen 5 an den Dichtungsapplikationskopf 2 geführt oder führbar oder ist ohne Berührung oder Kontakt entlang der Dichtungsführungsbereiche 6 der Dichtungsführungen 5 an den Dichtungsapplikationskopf 2 geführt oder führbar.

Die Figur 7 zeigt die erfindungsgemäße Vorrichtung zur Zuführung einer Dichtung 1 an einem erfindungsgemäßen Dichtungsapplikationskopf 2 zur Anbringung einer ganz oder teilweise umlaufenden Dichtung 1 an einer Fahrzeugkarosserie. Es wird auf die einführende Beschreibung zu den Figuren 1 bis 3 verwiesen, die hier ebenfalls zutreffend ist.

Abweichend zu den Figuren 1 bis 3 und deren Beschreibung ist es in Bezug auf das Beispiel, wie es in Figur 7 dargestellt ist, vorgesehen, dass eine Dichtungsführung 5 vorhanden sind, wobei die Dichtungsführung 5 zumindest einen Dichtungsführungsbereich 6 aufweist. Im konkreten Ausführungsbeispiel sind an der Dichtungsführung 5 drei Dichtungsführungsbereiche 6 vorhanden. Die Dichtungsführung 5 am Armabschnitt 3 angeordnet.

Die Dichtungsführungsbereiche 6 der Dichtungsführung 5 liegen, wie es beispielsweise in den Figuren 4 und 5 jedoch für zwei Dichtungszuführeinheiten 4 dargestellt ist, zur Dichtungszuführeinheit 4 einer Ebene 7. Die Dichtungsführungsbereiche 6 und die Dichtungszuführeinheit 4 sind entsprechend zueinander ausgerichtet, dass die Dichtung 1 versatzfrei von der Dichtungszuführungseinheit 4 und entsprechen der Lage des Dichtungsapplikationskopf 2 entlang direkt ohne Kontakt oder Berührung oder über oder entlang von einem, zwei oder mehr der Dichtungsführungsbereiche 6 an der Dichtungsführung 5 an den Dichtungsapplikationskopf 2 und unabhängig von dessen Lage insbesondere in Bezug auf eine Drehbewegung führbar ist. In Figur 7 ist gezeigt, dass ausgehend von der aktuellen Lage des Dichtungsapplikationskopf 2 die Dichtung 1 von der Dichtungszuführungseinheit 4 an den oder entlang der oder um zwei der Dichtungsführungsbereiche 6 der Dichtungsführung 5 über eine Zuführungsumlenkrolle 8 an den Dichtungsapplikationskopf 2 geführt ist. Am Dichtungsapplikationskopf 2 sind zudem, wie in Figur 7 dargestellt, weitere Umlenkrollen 11 oder Führungsrollen 11 vorhanden, um welche oder entlang welcher die Dichtung 1 geführt ist.

Entsprechend ist je nach aktueller Lage in Bezug auf die Drehbewegung des Dichtungsapplikationskopf 2 die Dichtung 1 von der Dichtungszuführungseinheit 4 um die oder entlang der Dichtungsführungen 5 führbar, ohne dass die Dichtung 1 an zumindest einem der Dichtungsführungsbereiche 6 entlang an den Dichtungsapplikationskopf 2 geführt ist, also ohne Kontakt oder ohne Berührung entlang der Dichtungsführungsbereiche 6 an den Dichtungsapplikationskopf 2 geführt ist. Ebenso kann je nach aktueller Lage des Dichtungsapplikationskopf 2 in Bezug auf dessen Drehbewegung die Dichtung 1 von der Dichtungszuführungseinheit 4 um die Dichtungsführungen 5 und entlang an zumindest einer der Dichtungsführungsbereiche 6 entlang an den Dichtungsapplikationskopf 2 geführt sein.

Wie in der Figur 7 dargestellt, sind die Dichtungsführungsbereiche 6 an der Dichtungsführung 5 kleeblattförmig beabstandet verteilt angeordnet. Die jeweiligen Dichtungsführungsbereiche 6 sind am Außenumfang kreisabschnittförmig, wobei der jeweilige Dichtungsführungsbereich 6 Führungsbleche 9 aufweist, wobei zwischen den Führungsblechen 9 Rollen 10 angeordnet sind, durch die eine kreisabschnittförmige Führung oder ein kreisabschnittförmiger Verlauf der Dichtung beschrieben wird oder erfolgt. Zwischen den parallelen Führungsblechen 9 oder entlang der Führungsbleche 9 und auf oder über den Rollen 10 ist je nach aktueller Lage in Bezug auf die Drehbewegung des Dichtungsapplikationskopf 2 die Dichtung 1 geführt oder führbar.

Statt der Rollen 10 kann der jeweilige Dichtungsführungsbereich 6 auch zumindest ein Band oder eine Gleitfläche aufweisen.

In den Figuren 4 bis 6 und in Figur 7 wurde zur besseren Übersicht auf die Darstellung weiterer Details des Dichtungsapplikationskopfes 2 verzichtet.

Bei dem erfindungsgemäßen Verfahren zum Anbringen einer ganz oder teilweise umlaufenden Dichtung 1 wird ein Dichtungsapplikationskopfes 2 mit Hilfe eines Roboters oder einer Handhabungsvorrichtung entlang einer für die Anbringung der Dichtung 1 vorgesehenen Linie an einer Fahrzeugkarosserie, einem Fahrzeugteil oder an einer Applikationsplatte zur anschließenden Anbringung vorzugsweise an einer Fahrzeugkarosserie oder einem Fahrzeugteil bewegt, wobei vorzugsweise eine Vorrichtung zur Zufuhrung einer Dichtung 1 an einen Dichtungsapplikationskopf 2 zum Einsatz kommt. Hierbei wird die Dichtung 1 über eine Dichtungszuführungseinheit 4 zugeführt und dem Dichtungsapplikationskopf 2 über Führungen und/oder Zugmittel einer Andruckrolle oder einer Andrückvorrichtung zugeführt und auf die vorgesehene Fläche an der Fahrzeugkarosserie oder an dem Fahrzeugteil oder auf Halteleisten an der Applikationsplatte aufgerollt bzw. aufgesteckt.

Erfindungsgemäß wird die über die Dichtungszuführungseinheit 4 zugeführte Dichtung 1 je nach Lage des um eine Drehachse drehbaren Dichtungsapplikationskopfes 2 um oder entlang einer Dichtungsführung 5 geführt und dem Dichtungsapplikationskopf 2 zugeführt. Entsprechend der Lage des um eine Drehachse drehbaren Dichtungsapplikationskopfes 2 wird entsprechend die Dichtung 1 um oder entlang der Dichtungsführung 5 und entlang zumindest eines Dichtungsführungsbereiches 6 geführt und dem Dichtungsapplikationskopf 1 zugeführt. Hierbei werden die Dichtungsführungen 5 und Dichtungsführungsbereiche 6 gemeinsam mit dem Dichtungsapplikationskopf 2 zum Anbringen der Dichtung 1 der Fahrzeugkarosserie, des Fahrzeugteils oder der Applikationsplatte bewegt. Dies schließt je nach der vorgesehenen Linie an einer Fahrzeugkarosserie, einem Fahrzeugteil oder an einer Applikationsplatte eine Drehbewegung und/oder eine Schwenkbewegung mit ein. Je nach Lage des Dichtungsapplikationskopfes 2 insbesondere in Bezug auf eine Drehbewegung liegt die Dichtung 1 an zumindest einem Dichtungsführungsbereich 6 der Dichtungsführung 5 an. Durch eine Drehung des Dichtungsapplikationskopfes 2 um die Drehachse ist es vorgesehen und möglich, dass die Dichtung 1 von dem zumindest einen Dichtungsführungsbereich 6 der der Dichtungsführung 5 abgehoben oder abgewickelt und ohne Kontakt oder Berührung entlang der Dichtungsführungsbereich 6 und/oder der Dichtungsführung 5 geführt wird. So wird je nach Lage des Dichtungsapplikationskopfes 2 bei dessen Drehung die Dichtung 2 abseits der oder des jeweiligen oder unabhängig von dem oder den jeweiligen Dichtungsführungsbereichen 6, also ohne Kontakt oder Berührung entlang der Dichtungsführung 5 dem Dichtungsapplikationskopfes 2 zugeführt. Bei dieser entsprechenden Lage wird die Dichtung 1 entlang der Dichtungsführung 5 an den Dichtungsapplikationskopf 2 geführt, ohne mit den Dichtungsführungsbereichen 6 in Kontakt oder Berührung zu kommen. Dies ist bei einer Drehung des Dichtungsapplikationskopf 2 von beispielsweise einer Endlage zu einer anderen Endlage in einem Bereich der Drehbewegung gegeben.

In einer weiteren Ausführung wird die über die Dichtungszuführungseinheit 4 zugeführte Dichtung 1 je nach Lage des um eine Drehachse drehbaren Dichtungsapplikationskopfes 2 zwischen zwei Dichtungsführungen 5 geführt dem Dichtungsapplikationskopf 2 zugeführt. Entsprechend der Lage des um eine Drehachse drehbaren Dichtungsapplikationskopfes 2 wird entsprechend abweichend die Dichtung 1 zwischen den zwei Dichtungsführungen 5 und entlang zumindest eines Dichtungsführungsbereiches 6 zumindest einer der Dichtungsführungen 5 geführt dem Dichtungsapplikationskopf 1 zugeführt. Hierbei werden die Dichtungsführungen 5 und Dichtungsführungsbereiche 6 gemeinsam mit dem Dichtungsapplikationskopf 2 zum Anbringen der Dichtung 1 der Fahrzeugkarosserie, des Fahrzeugteils oder der Applikationsplatte bewegt. Dies schließt je nach der vorgesehenen Linie an einer Fahrzeugkarosserie, einem Fahrzeugteil oder an einer Applikationsplatte eine Drehbewegung und/oder eine Schwenkbewegung mit ein. Je nach Lage des Dichtungsapplikationskopfes 2 insbesondere in Bezug auf eine Drehbewegung liegt die Dichtung 1 an zumindest einem Dichtungsführungsbereich 6 einer ersten der Dichtungsführungen 5 an. Durch eine Drehung des Dichtungsapplikationskopfes 2 um die Drehachse wird die Dichtung 1 von dem zumindest einen Dichtungsführungsbereich 6 der ersten der Dichtungsführungen 5 abgehoben oder abgewickelt und an zumindest einem Dichtungsführungsbereich 6 einer zweiten der Dichtungsführungen 5 angelegt oder entlang geführt. So wird je nach Lage des Dichtungsapplikationskopfes 2 bei dessen Drehung die Dichtung 2 beim Übergang zwischen den zwei Dichtungsführungen 5 abseits der oder des jeweiligen oder unabhängig von dem oder den jeweiligen Dichtungsführungsbereichen 6 der Dichtungsführungen 5 dem Dichtungsapplikationskopfes 2 zugeführt. Bei dieser entsprechenden Lage wird die Dichtung 1 zwischen den Dichtungsführungen 5 an den Dichtungsapplikationskopf 2 geführt, ohne mit den Dichtungsführungsbereichen 6 in Kontakt oder Berührung zu kommen. Dies ist bei einer Drehung des Dichtungsapplikationskopf 2 von beispielsweise einer Endlage zu einer anderen Endlage in einem Bereich der Drehbewegung gegeben.

### Zusammenstellung der Bezugszeichen

- 1: - Dichtung
- 2: - Dichtungsapplikationskopf
- 3: - Armabschnitt
- 4: - Dichtungszuführungseinheit
- 5: - Dichtungsführung
- 6: - Dichtungsführungsbereich
- 7: - Ebene
- 8: - Zuführungsumlenkrolle, Zuführungsrolle
- 9: - Führungsblech
- 10: - Rolle
- 11: - Umlenkrolle, Führungsrolle
- 12: - Haltearm

## Patentansprüche

1. Vorrichtung zur Zuführung einer Dichtung (1) an einen Dichtungsapplikationskopf (2) zur Anbringung einer ganz oder teilweise umlaufenden Dichtung (1) an einer Fahrzeugkarosserie, einem Fahrzeugteil oder einer Applikationsplatte zur anschließenden Anbringung an einer Fahrzeugkarosserie oder einem Fahrzeugteil, wobei der Dichtungsapplikationskopf (2) an einem Roboter mit oder über zumindest einem am Roboter angeordneten Armabschnitt (3) oder eine sonstige Handhabungseinrichtung dreh- und/oder schwenkbar festlösbar angeordnet ist und dass an dem Roboter oder einem Robotergelenk an dem zumindest einen Armabschnitt (3) oder der sonstigen Handhabungseinrichtung eine Dichtungszuführungseinheit (4) zum Zuführen der Dichtung (1) vorhanden ist,
**dadurch gekennzeichnet,**
**dass** zumindest eine Dichtungsführung (5) vorgesehen ist, wobei die zumindest eine Dichtungsführung (5) zumindest einen Dichtungsführungsbereich (6) aufweist, wobei der zumindest eine Dichtungsführungsbereich (6) zur Dichtungszuführeinheit (4) in einer Ebene (7) liegt oder zueinander ausgerichtet ist und die Dichtung (1) von der Dichtungszuführungseinheit (4) um die zumindest eine Dichtungsführung (5) oder entlang oder auf der zumindest einen Dichtungsführung (5) und entlang des zumindest einen Dichtungsführungsbereiches (6) der zumindest einen Dichtungsführung (5) an den Dichtungsapplikationskopf (2) führbar ist.

2. Vorrichtung nach Anspruch 1,
**dadurch gekennzeichnet,**
**dass** zwei Dichtungsführungen (5) vorgesehen sind, wobei die Dichtungsführungen (5) jeweils den zumindest einen Dichtungsführungsbereich (6) aufweisen, wobei die Dichtungsführungsbereiche (6) zueinander und zur Dichtungszuführeinheit (4) einer Ebene (7) liegen oder zueinander ausgerichtet sind und die Dichtung (1) von der Dichtungszuführungseinheit (4) zwischen den zwei Dichtungsführungen (5) oder zwischen den zwei Dichtungsführungen (5) und entlang des zumindest einen Dichtungsführungsbereiches (6) zumindest einer der Dichtungsführungen (5) an den Dichtungsapplikationskopf (2) führbar ist.

3. Vorrichtung nach Anspruch 1 und 2,
**dadurch gekennzeichnet,**
**dass** die zumindest eine Dichtungsführung (5) am Armabschnitt (3) angeordnet ist oder
**dass** bei zwei Dichtungsführungen (5) eine erste der zwei Dichtungsführungen (5) am Dichtungsapplikationskopf (2) und eine zweite der zwei Dichtungsführungen (5) am Armabschnitt (3) oder an der sonstigen Handhabungseinrichtung angeordnet ist.

4. Vorrichtung nach einem der vorhergehenden Ansprüche,
**dadurch gekennzeichnet,**
**dass** bei zwei Dichtungsführungen (5) die zwei Dichtungsführungen (5) am Dichtungsapplikationskopf (2) angeordnet sind
oder
**dass** die zwei Dichtungsführungen (5) am Armabschnitt (3) oder der sonstigen Handhabungseinrichtung angeordnet sind.

5. Vorrichtung nach einem der vorhergehenden Ansprüche,
**dadurch gekennzeichnet,**
**dass** der Armabschnitt (3) ein Roboterarm ist oder
**dass** der Armabschnitt (3) ein einen Roboterarm verlängerndes oder bildendes oder anordbares Zwischenstück oder Verlängerungsstück ist oder
**dass** der Armabschnitt (3) ein an den Roboterarm oder an ein Robotergelenk anordbares Zwischenstück oder Verlängerungsstück ist,
wobei die zumindest eine Dichtungsführung (5) oder bei zwei Dichtungsführungen (5) eine der Dichtungsführungen (5) oder die zwei Dichtungsführungen (5) an dem Zwischenstück oder Verlängerungsstück angeordnet sind.

6. Vorrichtung nach einem der vorhergehenden Ansprüche,
**dadurch gekennzeichnet,**
**dass** die Dichtungszuführungseinheit (4) einen Zuführungstrichter aufweist.

7. Vorrichtung nach einem der vorhergehenden Ansprüche,
**dadurch gekennzeichnet,**
**dass** bei zwei Dichtungsführungen (5) die zwei Dichtungsführungen (5) zueinander beabstandet angeordnet sind.

8. Vorrichtung nach einem der vorhergehenden Ansprüche,
**dadurch gekennzeichnet,**
**dass** eine Zuführungsumlenkrolle (8) oder eine Zuführungsrolle (8) am Dichtungsapplikationskopf (2) und/oder im Bereich der oder an der zumindest einen Dichtungsführung (5) oder im Bereich einer der zwei Dichtungsführungen (5) und/oder an einer der zwei Dichtungsführungen (5) und/oder an dem zumindest einen Dichtungsführungsbereich (6) oder an einem der Dichtungsführungsbereiche (6) vorgesehen sind.

9. Vorrichtung nach einem der vorhergehenden Ansprüche,
**dadurch gekennzeichnet,**
**dass** die jeweiligen Dichtungsführungsbereiche (6) bogenförmig oder kreisringförmig oder kreisabschnittförmig sind und/oder
**dass** bei zwei oder mehr der Dichtungsführungsbereiche (6) an der jeweiligen Dichtungsführung (5) die Dichtungsführungsbereiche (6) bogenförmig versetzt oder kreisförmig versetzt oder kreisabschnittförmig versetzt und/oder beabstandet verteilt angeordnet sind
und/oder
**dass** bei drei oder mehr der Dichtungsführungsbereiche (6) an der jeweiligen Dichtungsführung (5) die Dichtungsführungsbereiche (6) kleeblattförmig oder sternförmig versetzt angeordnet sind.

10. Vorrichtung nach einem der vorhergehenden Ansprüche,
**dadurch gekennzeichnet,**
**dass** der jeweilige Dichtungsführungsbereich (6) Führungsbleche (9) aufweist, wobei entlang der Führungsbleche (9) und/oder zwischen zwei parallel beabstandeten Führungsblechen (9) die Dichtung (1) führbar ist
und/oder
**dass** der jeweilige Dichtungsführungsbereich (6) zumindest eine Rolle (10), zumindest ein Band oder eine Gleitfläche aufweist.

11. Dichtungsapplikationskopf (2) zur Zuführung und Anbringung einer Dichtung (1) an einer Fahrzeugkarosserie, einem Fahrzeugteil oder einer Applikationsplatte durch umlaufende Bewegung entlang einer für die Anbringung der Dichtung (1) vorgesehenen Linie unter Verwendung der Vorrichtung zur Zuführung einer Dichtung (1) an einen Dichtungsapplikationskopf (2) nach einem der Ansprüche 1 bis 10,
**dadurch gekennzeichnet,**
**dass** der dreh- und/oder schwenkbare Dichtungsapplikationskopf (2) mit zumindest einer Dichtungsführung (5) in Verbindung steht, wobei die zumindest eine Dichtungsführung (5) zumindest einen Dichtungsführungsbereich (6) aufweist, wobei der zumindest eine Dichtungsführungsbereich (6) oder die jeweiligen Dichtungsführungsbereiche (6) zueinander und zu einer Dichtungszuführeinheit (4) in einer Ebene (7) liegen oder zueinander ausgerichtet sind und die Dichtung (1) von der Dichtungszuführungseinheit (4) zu der zumindest einen Dichtungsführung (5) und je nach Lage des Dichtungsapplikationskopfes (1) entlang des zumindest einen Dichtungsführungsbereichs (6) oder entlang der jeweiligen Dichtungsführungsbereiche (6) der zumindest einen Dichtungsführung (5) an den Dichtungsapplikationskopf (1) führbar ist.

12. Dichtungsapplikationskopf (2) nach Anspruch 12,
**dadurch gekennzeichnet,**
**dass** der dreh- und/oder schwenkbare Dichtungsapplikationskopf (6) mit zwei Dichtungsführungen (5) in Verbindung steht, wobei die Dichtungsführungen (5) jeweils den zumindest einen Dichtungsführungsbereich (6) aufweisen, wobei die Dichtungsführungsbereiche (6) zueinander und zu der Dichtungszuführeinheit (4) in einer Ebene (7) liegen oder zueinander ausgerichtet sind und die Dichtung (1) von der Dichtungszuführungseinheit (4) zwischen den zwei Dichtungsführungen (5) und je nach Lage des Dichtungsapplikationskopfes (1) entlang der Dichtungsführungsbereiche (6) zumindest einer der Dichtungsführungen (5) an den Dichtungsapplikationskopf (1) führbar ist.

13. Verfahren zum Anbringen einer ganz oder teilweise umlaufenden Dichtung (1) mittels eines Dichtungsapplikationskopfes (2) mit Hilfe eines Roboters oder einer Handhabungsvorrichtung entlang einer für die Anbringung der Dichtung (1) vorgesehenen Linie an einer Fahrzeugkarosserie, einem Fahrzeugteil oder an einer Applikationsplatte zur anschließenden Anbringung vorzugsweise an einer Fahrzeugkarosserie oder einem Fahrzeugteil, unter Verwendung der Vorrichtung nach einem der Ansprüche 1 bis 10, wobei die Dichtung (1) über eine Dichtungszuführungseinheit (4) zugeführt wird und die Dichtung (1) dem Dichtungsapplikationskopf (2) über Führungen und/oder Zugmittel einer Andruckrolle oder einer Andrückvorrichtung zugeführt und auf die vorgesehene Fläche an der Fahrzeugkarosserie oder an dem Fahrzeugteil oder auf Halteleisten an der Applikationsplatte aufgerollt bzw. aufgesteckt wird,
**dadurch gekennzeichnet,**
**dass** die über die Dichtungszuführungseinheit (4) zugeführte Dichtung (1) je nach Lage des um eine Drehachse drehbaren Dichtungsapplikationskopfes (2) entlang zumindest einer oder um zumindest eine Dichtungsführung (5) und entlang zumindest eines Dichtungsführungsbereiches (6) der zumindest einen Dichtungsführung (5) geführt und dem Dichtungsapplikationskopf (2) zugeführt wird, und die zumindest eine Dichtungsführung (5) und der zumindest eine Dichtungsführungsbereich (6) gemeinsam mit dem Dichtungsapplikationskopf (2) zum Anbringen der Dichtung (1) der Fahrzeugkarosserie, des Fahrzeugteils oder der Applikationsplatte bewegt werden.

14. Verfahren nach Anspruch 13,
**dadurch gekennzeichnet,**
**dass** die über die Dichtungszuführungseinheit (4) zugeführte Dichtung (1) je nach Lage des um die Drehachse drehbaren Dichtungsapplikationskopfes (2) zwischen zwei Dichtungsführungen (5) oder zwischen zwei Dichtungsführungen (5) und entlang des zumindest einen Dichtungsführungsbereiches (6) zumindest einer der zwei Dichtungsführungen (5) geführt und dem Dichtungsapplikationskopf (2) zugeführt wird, und die zwei Dichtungsführungen (5) und die jeweiligen Dichtungsführungsbereiche (6) gemeinsam mit dem Dichtungsapplikationskopf (2) zum Anbringen der Dichtung (1) der Fahrzeugkarosserie, des Fahrzeugteils oder der Applikationsplatte bewegt werden.

15. Verfahren nach Anspruch 14,
**dadurch gekennzeichnet,**
**dass** je nach Lage des Dichtungsapplikationskopfes (2) die Dichtung (1) an zumindest einem Dichtungsführungsbereich (6) der zumindest einen Dichtungsführung (5) anliegt oder
**dass** je nach Lage des Dichtungsapplikationskopfes (2) bei der Drehung die Dichtung (2) abseits des oder unabhängig von dem zumindest einen Dichtungsführungsbereich (6) der zumindest einen Dichtungsführung (5) dem Dichtungsapplikationskopfes (2) zugeführt wird
oder
**dass** je nach Lage des Dichtungsapplikationskopfes (2) die Dichtung (1) an zumindest einem Dichtungsführungsbereich (6) einer ersten der zwei Dichtungsführungen (5) anliegt und durch eine Drehung des Dichtungsapplikationskopfes (2) um die Drehachse die Dichtung (1) von dem zumindest einen Dichtungsführungsbereich (6) der ersten der zwei Dichtungsführungen (5) abgehoben oder abgewickelt und an zumindest einem Dichtungsführungsbereich (6) einer zweiten der zwei Dichtungsführungen (5) angelegt wird und/oder
**dass** je nach Lage des Dichtungsapplikationskopfes (2) bei der Drehung die Dichtung (2) beim Übergang zwischen den zwei Dichtungsführungen (5) abseits des oder unabhängig von dem zumindest einen Dichtungsführungsbereiches (6) der Dichtungsführungen (5) dem Dichtungsapplikationskopfes (2) zugeführt wird.
